# EUROPÄISCHE PATENTSCHRIFT

(11) **EP 1 925 862 B1**
(45) Veröffentlichungstag und Bekanntmachung des Hinweises auf die Patenterteilung: **23.01.2013**
(21) Anmeldenummer: 07117534.3
(22) Anmeldetag: 28.09.2007
(51) Int. Cl.: F16K 15/04, F16K 31/06, B60T 8/36

(54) **Integrierbares Rückschlagventil**
Integrable non-return valve
Clapet anti-retour intégrable

(30) Priorität: 27.11.2006 DE 102006055832
(43) Veröffentlichungstag der Anmeldung: 28.05.2008
(73) Patentinhaber: ROBERT BOSCH GMBH, 70442 Stuttgart (DE)
(72) Erfinder: Fink, Reinhard, 74321 Bietigheim-Bissingen (DE); Fricke-Schmidt, Joerg, 74078 Heilbronn (DE); Vier, Elmar, 71691 Freiberg A. N. (DE)

(56) Entgegenhaltungen:
- EP-A2- 0 531 262
- DE-A1- 19 955 888
- JP-A- 2003 191 973
- JP-U- 60 080 161
- US-A- 4 570 669

## Beschreibung

### Stand der Technik

Die Erfindung betrifft ein integrierbares Rückschlagventil nach der Gattung des unabhängigen Patentanspruchs 1 und eine zugehöriges Magnetventil mit einem solchen Rückschlagventil.

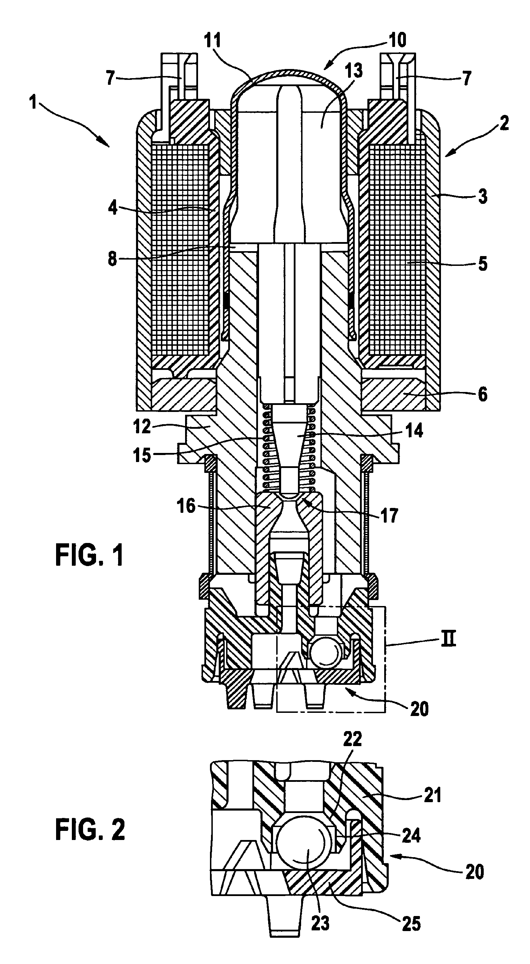

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliche Magnetventil 1 eine Magnetbaugruppe 2 zur Erzeugung eines Magnetflusses, die einen Gehäusemantel 3, einen Wicklungsträger 4, eine Spulenwicklung 5 und eine Abdeckscheibe 6 umfasst, und eine Ventilpatrone 10, die eine Kapsel 11, einen Ventileinsatz 12, einen Anker 13 mit einem Stößel 14 und eine Rückstellfeder 15 umfasst. Die Magnetbaugruppe 2 erzeugt eine Magnetkraft, die den längsbeweglichen Anker 13 mit dem Stößel 14 entgegen der Kraft der Rückstellfeder 15 gegen den Ventileinsatz 12 bewegt. Die auf den Wicklungsträger 4 gewickelte Spulenwicklung 5 bildet eine elektrische Spule, die über elektrische Anschlüsse 7 ansteuerbar ist. Der Ventileinsatz 12 leitet den von der Magnetbaugruppe 2 über die Abdeckscheibe 6 eingeleiteten Magnetfluss axial über einen Luftspalt 8 in Richtung Anker 13. Durch Bestromung der Spulenwicklung 5 über die elektrischen Anschlüsse 7 und den dadurch erzeugten Magnetfluss wird der Anker 13 entgegen der Kraft der Rückstellfeder 15 gegen den Ventileinsatz 12 bewegt. Zudem nimmt der Ventileinsatz 12 den so genannten Ventilkörper 16 auf, der einen Hauptventilsitz 17 umfasst, in welchen der Stößel 14 über eine Dichtkalotte dichtend eintaucht, um die Dichtfunktion des Magnetventils 1 umzusetzen. Wie weiter aus Figur 1 ersichtlich ist, umfasst das herkömmliche Magnetventil 1 ein Rückschlagventil 20, das eine richtungsorientierte Durchflussfunktion ausführt. Fig. 2 zeigt eine Detaildarstellung des Rückschlagventils 20. Wie aus Fig. 2 ersichtlich ist, umfasst das Rückschlagventil 20 des herkömmlichen Magnetventils 1 als wesentliche Teile ein bewegliches Schließelement 23, einen in einem Rückschlagventilträger 21 angeordneten Dichtsitz 22, eine Ventilführung 24 und eine Hubbegrenzung 25 bzw. Anlage, die den maximalen Hub des innerhalb der Ventilführung 24 beweglichen Schließelements 23 begrenzt. Bekannte Rückschlagventile, die innerhalb von Magnetventilen angeordnet sind, umfassen mindestens drei Bauteile und sind in der Regel Teil des Magnetventils oder dessen Unterbaugruppen. Daher ist die Fertigung bzw. Montage des Rückschlagventils meist mit der Magnetventilfertigung bzw. Montage verbunden.

In der Druckschrift DE 199 55 888 A1 wird ein Magnetventil mit einem Rückschlagventil beschrieben. Das beschriebene Magnetventil weist ein zwischen einem Druckmitteleinlass und einem Druckmittelauslass angeordnetes Sitzventil und im Bypass zu diesem ein Rückschlagventil mit einem hohlkegelförmigen Ventilsitz und einem Schließkörper auf, der einen komplementär zum Ventilsitz ausgebildeten Abschnitt hat. In den Abschnitt ist umfangseitig ein gummielastischer Dichtring eingelassen, der in der Schließstellung des Rückschlagventils bei niedrigen Drücken Formabweichungen des Ventilsitzes auszugleichen vermag.

In der Druckschrift US 4,570,669 A wird einfaches federloses Rückschlagventil beschrieben. Das beschriebene Rückschlagventil umfasst einen Ventilträger, der einen Fluidkanal und einen zugehörigen ersten Dichtbereich aufweist, wobei der Fluidkanal über ein bewegliches erstes Schließelement schließbar ist, das einen zweiten Dichtbereich aufweist, wobei der erste Dichtbereich und der zweite Dichtbereich im geöffneten Zustand des Fluidkanals einander gegenüberliegen und im geschlossenen Zustand des Fluidkanals dichtend zusammenwirken, wobei das erste Schließelement mindestens ein Führungselement umfasst, an dessen Ende ein Halteelement angeordnet ist, wobei der erste Dichtbereich und der zweite Dichtbereich im geöffneten Zustand des Fluidkanals einander mit einem vorgegebenen Abstand gegenüberliegen und das zugehörige Halteelement mindestens teilweise auf einem Rand des Fluidkanals aufliegt.

In der Druckschrift JP 2003191973 A wird ein Rückschlagventil mit einem Ventilträger offenbart, der einen Fluidkanal und einen zugehörigen ersten Dichtbereich aufweist. Der Fluidkanal ist über ein bewegliches erstes Schließelement schließbar, das einen zweiten Dichtbereich aufweist, wobei der erste Dichtbereich und der zweite Dichtbereich im geöffneten Zustand des Fluidkanals einander gegenüberliegen und im geschlossenen Zustand des Fluidkanals dichtend zusammenwirken. Zudem umfasst das erste Schließelement mindestens ein Führungselement, an dessen Ende ein Halteelement angeordnet ist, wobei das mindestens eine Führungselement mit dem Halteelement derart durch den Fluidkanal geführt ist, dass das zugehörige Halteelement am anderen Ende des Fluidkanals verhakt ist, wobei der erste Dichtbereich und der zweite Dichtbereich im geöffneten Zustand des Fluidkanals einander mit einem vorgegebenen Abstand gegenüberliegen und das zugehörige Halteelement mindestens teilweise auf einem Rand des Fluidkanals aufliegt.

### Offenbarung der Erfindung

Das erfindungsgemäße Rückschlagventil mit den Merkmalen des unabhängigen Patentanspruchs 1 hat demgegenüber den Vorteil, dass ein erstes bewegliches Schließelement mindestens ein Führungselement umfasst, an dessen Ende ein Halteelement angeordnet ist. Das mindestens eine Führungselement ist mit dem Halteelement derart durch einen Fluidkanal eines Ventilträgers geführt, dass das zugehörige Halteelement am anderen Ende des Fluidkanals verhakt ist. Das bedeutet, dass das mindestens eine Führungselement, das jeweilige mit dem mindestens einen Führungselement verbundene Halteelement und der Fluidkanal jeweils beispielsweise nach Art einer Clipsverbindung zusammenwirken. Im geöffneten Zustand des Fluidkanals, in dem ein Fluid in der vorgegebenen Richtung durch den Fluidkanal fließt, liegen ein erster Dichtbereich des Fluidkanals und ein zweiter Dichtbereich des Schließelements einander mit einem vorgegebenen Abstand gegenüber und das zugehörige Halteelement liegt mindestens teilweise auf einem Rand des Fluidkanals auf. Der Fluidkanal kann über das bewegliche erste Schließelement geschlossen werden, wobei der erste Dichtbereich und der zweite Dichtbereich im geschlossenen Zustand des Fluidkanals dichtend zusammenwirken und einen Fluidfluss verhindern.

Erfindungsgemäß ist das erste Schließelement als ein mit dem Fluidkanal leitend verbundener Hohlkörper ausgeführt, in dessen Innenraum ein dritter Dichtbereich ausgebildet ist und in dem ein zweites bewegliches Schließelement mit einem vorgebbaren Hub geführt ist, das einen vierten Dichtbereich aufweist. Im geöffneten Zustand des Fluidkanals liegen der dritte Dichtbereich und der vierte Dichtbereich einander mit einem Abstand gegenüber, der vom vorgegebenen Hub des zweiten Schließelements bestimmt ist. Im geschlossenen Zustand des Fluidkanals wirken der dritte Dichtbereich und der vierte Dichtbereich dichtend zusammen und schließen die leitende Verbindung zum Fluidkanal. Der Hub des zweiten beweglichen Schließelements kann beispielsweise durch mindestens eine Begrenzungsnase vorgegeben werden, die in den Innenraum des ersten Schließelements ragt, wobei das zweite Schließelement im geöffneten Zustand des Fluidkanals an der mindestens einen Begrenzungsnase anliegt und die leitende Verbindung zum Fluidkanal freigibt. Diese Ausführungsform des Rückschlagventils ermöglicht in vorteilhafter Weise ein zweistufiges Öffnen und Schließen des Fluidkanals.

Durch das erfindungsgemäße Rückschlagventil kann die erforderliche Teileanzahl in vorteilhafter Weise reduziert werden, da auf die aus dem Stand der Technik bekannte und in Fig. 2 dargestellte Hubbegrenzung bzw. Anlage verzichtet werden kann. Zudem kann das erfindungsgemäße Rückschlagventil als unabhängige Baugruppenkomponente hergestellt und vollständig in ein Magnetventil integriert werden.

Das erfmdungsgemäße Rückschlagventil kann beispielsweise in Magnetventilen verwendet werden, die in einem Antiblockiersystem (ABS) oder einem Antriebsschlupfregelsystem (ASR-System) oder einem elektronischen Stabilitätsprogrammsystem (ESP-System) eingesetzt werden.

Durch die in den abhängigen Ansprüchen aufgeführten Maßnahmen und Weiterbildungen sind vorteilhafte Verbesserungen des im unabhängigen Patentanspruch 1 angegebenen Rückschlagventils möglich.

Besonders vorteilhaft ist, dass der vorgegebene Abstand, mit dem der erste Dichtbereich und der zweite Dichtbereich im geöffneten Zustand des Fluidkanals einander gegenüberliegen, durch den Hub des ersten Schließelements vorgegeben ist. Der Hub des ersten Schließelements kann beispielsweise über die Länge des mindestens einen Führungselements vorgegeben werden.

In weiterer Ausgestaltung des erfindungsgemäßen Rückschlagventils kann das erste Schließelement als Kunststoffformteil ausgeführt werden, wobei der zweite Dichtbereich als abgerundete Dichtfläche ausgeführt werden kann und der dritte Dichtbereich als Dichtsitz ausgeführt werden kann. Die Kunststoffformteile können in vorteilhafte Weise kostengünstig und massenhaft hergestellt werden. Weiterhin sind die Dichtbereiche des ersten Schließelements durch die Verwendung von Kunststoff weich ausgeführt, wodurch hohe Dichtheitsanforderungen, insbesondere bei ESP-Funktionen, erfüllt werden können. Zudem wird durch die Verwendung von Kunststoff die Unabhängigkeit von Formtoleranzen der Geometrie des Ventilträgers erhöht. Das zweite Schließelement kann beispielsweise als Kugel ausgeführt werden.

Das erfindungsgemäße Rückschlagventil kann in vorteilhafter Weise als vormontagefähige Unterbaugruppe hergestellt und gehandhabt werden, wodurch sich die Fertigung der Magnetventile vereinfachen bzw. flexibler gestalten lässt. Das Rückschlagventil besteht je nach Ausführungsform zusätzlich zum Fluidkanal aus nur einem Teil oder aus zwei Teilen und lässt sich flexibel und bauraumoptimal im Magnetventil anordnen. Das Rückschlagventil kann unabhängig von der Magnetventilmontage gefertigt, montiert und dann zu beliebigen Zeitpunkten als Unterbaugruppe in das Magnetventil einfach integriert werden. Zudem kann das erfindungsgemäße Rückschlagventil vollständig in das Magnetventil integriert werden.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Zudem bezeichnen in den Zeichnungen gleiche Bezugszeichen Elemente bzw. Komponenten, die gleiche bzw. analoge Funktionen ausführen.

### Kurze Beschreibung der Zeichnungen

Fig. 1 zeigt eine schematische Schnittdarstellung eines herkömmlichen Magnetventils.

Fig. 2 zeigt eine Schnittdarstellung eines Details II aus Fig. 1.

Fig. 3 zeigt eine perspektivische Schnittdarstellung eines Ausschnitts eines Magnetventils, das wesentliche Komponenten eines Rückschlagventils zeigt.

Fig. 4 zeigt eine Schnittdarstellung des Ausschnitts des Magnetventils gemäß Fig. 3.

Fig. 5 bis 7 zeigen jeweils ein Ausführungsbeispiel eines in Fig. 3 und 4 dargestellten ersten Schließelements.

Fig. 8 zeigt eine schematische Schnittdarstellung eines erfindungsgemäßen Rückschlagventils in einer geöffneten Stellung.

Fig. 9 zeigt eine schematische Schnittdarstellung des erfindungsgemäßen Rückschlagventils in einer geschlossenen Stellung.

Fig. 10 zeigt eine perspektivische Darstellung eines Schließelements des Rückschlagventils gemäß Fig. 8 und 9.

Fig. 11 zeigt eine perspektivische Schnittdarstellung des Schließelements aus Fig. 10 entlang der Schnittlinie XI-XI.

### Ausführungsformen der Erfindung

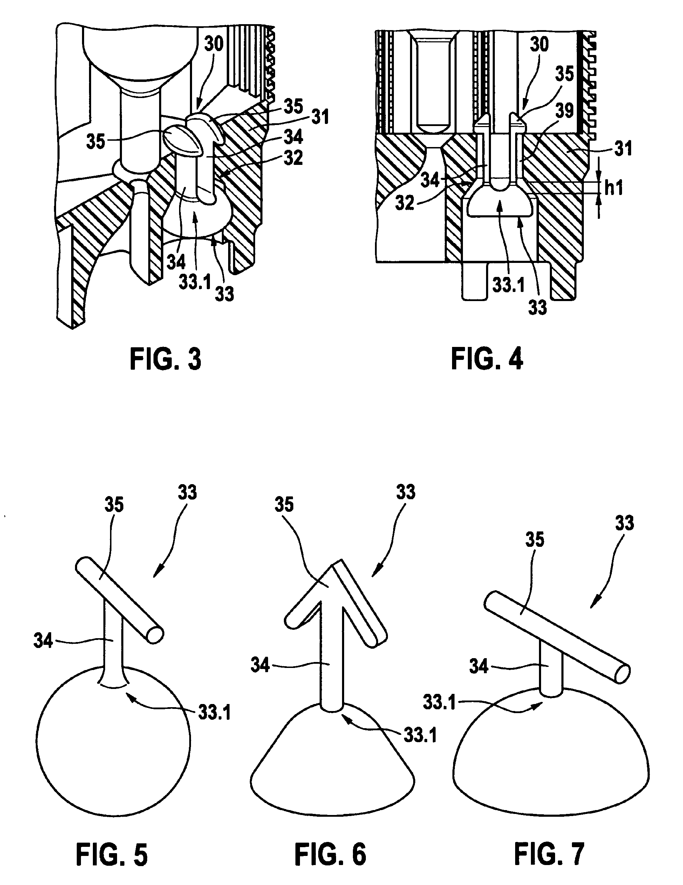

Fig. 3 und 4 zeigen eine Ausführungsform eines Rückschlagventils 30. Wie aus Fig. 3 und 4 ersichtlich ist, umfasst die Ausführungsform des Rückschlagventils 30 einen Ventilträger 31, der einen Fluidkanal 39 und einen zugehörigen ersten Dichtbereich 32 aufweist, und ein bewegliches erstes Schließelement 33, das einen zweiten Dichtbereich 33.1 und zwei Führungselemente 34 aufweist, an deren Ende jeweils ein Halteelement 35 angeordnet ist. Die Führungselemente 34 sind derart durch den Fluidkanal 39 geführt, dass die zugehörigen Halteelemente 35 am anderen Ende des Fluidkanals 39 verhakt sind, d.h. die Führungselemente 34, die jeweilige mit den Führungselementen 34 verbundenen Halteelemente 35 und der Fluidkanal 39 wirken beim Einführen der Halteelemente 35 mit den Führungselementen 34 in den Fluidkanal 39 und beim Austreten der Halteelemente 35 aus dem Fluidkanal 39 jeweils nach Art einer Clipsverbindung zusammen. Das bedeutet, dass nach dem Einführen des Schließelements 33 über die Führungselemente 34 und die Halteelemente 35 in den Fluidkanal 39 der erste Dichtbereich 32 und der zweite Dichtbereich 33.1 im geöffneten Zustand des Fluidkanals 39 einander mit einem vorgegebenen Abstand gegenüberliegen und die zugehörigen Halteelemente 35 am Rand des Fluidkanals 39 auf dem Ventilträger aufliegen. Der Abstand, mit dem der erste Dichtbereich 32 und der zweite Dichtbereich 33.1 im geöffneten Zustand des Fluidkanals 39 einander gegenüberliegen, wird durch einen Hub h1 des ersten Schließelements 33 vorgegeben, der über die Länge der Führungselemente 34 bestimmt wird. Der Fluidkanal 39 des Rückschlagventils 30 ist dann geöffnet, wenn ein Fluid in eine gewünschte Richtung fließt. Der Fluidkanal 39 wird durch das mit dem Hub h1 bewegbare erste Schließelement 33 geschlossen, wenn sich die Richtung des Fluidflusses umkehrt, wobei der erste Dichtbereich 32 und der zweite Dichtbereich 33.1 im geschlossenen Zustand des Fluidkanals 39 dichtend zusammenwirken.

Fig. 5 bis 7 zeigen verschiedene Ausführungsbeispiele des ersten Schließelements 33. Wie aus Fig. 5 ersichtlich ist, weist ein erstes Ausführungsbeispiel des ersten Schließelements 33 einen kugelförmigen zweiten Dichtbereich 33.1 und ein als Stab ausgeführtes Führungselement 34 auf, das an den zweiten Dichtbereich 33.1 angeformt ist, und an dessen Ende ein stabförmiges Halteelement 35 angeordnet ist.

Wie aus Fig. 6 ersichtlich ist, weist ein zweites Ausführungsbeispiel des ersten Schließelements 33 einen kappenförmigen zweiten Dichtbereich 33.1 und ein als Stab ausgeführtes Führungselement 34 auf, das an den zweiten Dichtbereich 33.1 angeformt ist und an dessen Ende ein Halteelement 35 in Form einer Pfeilspitze angeordnet ist.

Wie aus Fig. 7 ersichtlich ist, weist ein drittes Ausführungsbeispiel des ersten Schließelements 33 eine halbkugelförmige zweiten Dichtbereich 33.1 und ein als Stab ausgeführtes Führungselement 34 auf, das an den zweiten Dichtbereich 33.1 angeformt ist und an dessen Ende ein stabförmiges Halteelement 35 angeordnet ist.

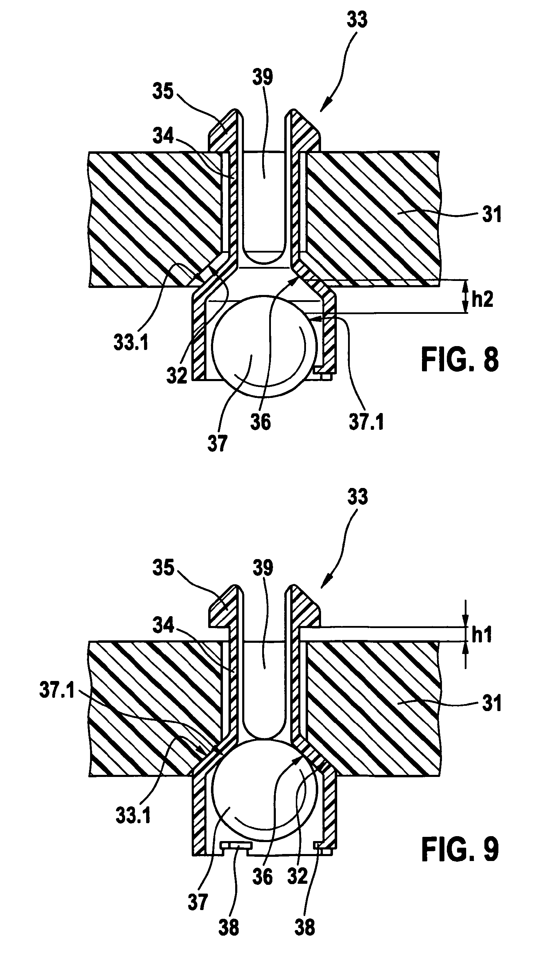

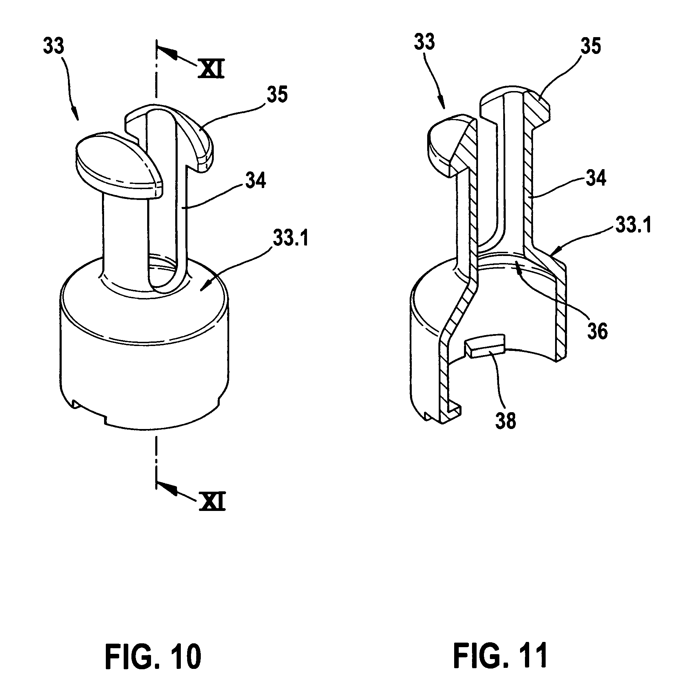

Fig. 8 und 9 zeigen eine Ausführungsform eines erfindungsgemäßen Rückschlagventils 30. Fig. 10 und 11 zeigen ein erstes Schließelement 33 der zweiten Ausführungsform des erfindungsgemäßen Rückschalgventils 30 gemäß Fig. 8 und 9. Wie aus Fig. 8 bis 11 ersichtlich ist, umfasst die zweite Ausführungsform des erfindungsgemäßen Rückschlagventils 30 ein als Hohlkörper ausgeführtes erstes Schließelement 33, das mit dem Fluidkanal 39 leitend verbunden ist und in dessen Innenraum ein dritter Dichtbereich 36 ausgebildet ist. Zudem wird im Innenraum des als Hohlkörper ausgeführten ersten Dichtelements 33 ein zweites bewegliches Schließelement 37 mit einem vorgebbaren Hub h2 geführt, das einen vierten Dichtbereich 37.1 aufweist. Das zweite Schließelement 37 ist im dargestellten Ausführungsbeispiel als Kugel ausgeführt.

Wie weiter aus Fig. 8 ersichtlich ist, liegen der dritte Dichtbereich 36 und der vierte Dichtbereich 33.1 im geöffneten Zustand des Fluidkanals 39 einander mit einem Abstand gegenüber, der vom vorgegebenen Hub h2 des zweiten Schließelements 37 bestimmt ist. Wie weiter aus Fig. 9 ersichtlich ist, wirken der dritte Dichtbereich 36 und der vierte Dichtbereich 33.1 im geschlossenen Zustand des Fluidkanals 39 dichtend zusammen und schließen die leitende Verbindung zum Fluidkanal 39.

Wie weiter aus Fig. 8 bis 11 ersichtlich ist, wird der Hub h2 des zweiten beweglichen Schließelements 37 durch mehrere Begrenzungsnasen 38 vorgegeben, die in den Innenraum des ersten Schließelements 33 ragen und auf denen das zweite Schließelement 37 im geöffneten Zustand des Rückschlagventils 30 anliegt und die leitende Verbindung zum Fluidkanal 39 freigibt. Die Begrenzungsnasen können nach Einbringen des zweiten Schließelements 37 in den Innenraum des ersten Schließelements beispielsweise durch thermisches Umformen, vorzugsweise durch Ultraschallverformen, einfach erzeugt werden.

Das erste Schließelement 33 der zweiten Ausführungsform des erfindungsgemäßen Rückschlagventils 30 ermöglicht mit dem zweiten Schließelement 37 ein zweistufiges Öffnen und Schließen des Fluidkanals 39.

Das erste Schließelement 33 kann in beiden beschriebenen Ausführungsformen des erfindungsgemäßen Rückschlagventils 30 beispielsweise als Kunststoffformteil ausgeführt werden, wobei der zweite Dichtbereich 33.1 als abgerundete Dichtfläche ausgeführt ist und der dritte Dichtbereich im Innenraum als Dichtsitz 36 ausgeführt ist. Die Ausführung als Kunststoffteil ermöglicht, dass das erste Schließelement 33 sehr kostengünstig und massenhaft hergestellt werden kann. Zudem ergeben sich durch die Verwendung von Kunststoff weiche Dichtbereiche 33.1, 36, wodurch hohe Dichtheitsanforderungen, insbesondere bei ESP- Funktionen, erfüllt werden können und sich eine höhere Unabhängigkeit von der Geometrie und den Formtoleranzen des ersten Dichtbereichs 32 am Ventilträger 31 ergeben. So ist der erste Dichtbereich 32 am Ventilträger 31 in Fig. 3, 4, 8 und 9 beispielsweise als hohlkegelförmiger Dichtsitz ausgebildet. Alternativ kann der erste Dichtbereich 32 bei einer nicht dargestellten Ausführungsform jedoch auch als Dichtkante ausgebildet werden, die mit dem zweiten Dichtbereich 33.1 des ersten Schließelements im geschlossenen Zustand des Fluidkanals 39 dichtend zusammenwirkt.

Das erfindungsgemäße Rückschlagventil 30 kann beispielsweise in stromlos offene oder stromlos geschlossene Magnetventile integriert werden, die beispielsweise in einem Antiblockiersystem (ABS) oder einem Antriebsschlupfregelsystem (ASR-System) oder einem elektronischen Stabilitätsprogrammsystem (ESP-System) eingesetzt werden, wobei das integrierte erfindungsgemäße Rückschlagventil die richtungsorientierte Durchflussfunktion übernimmt.

Das erfindungsgemäße Rückschlagventil kann als vormontagefähige Unterbaugruppe hergestellt und gehandhabt werden, wobei die Unterbaugruppe maximal nur aus zwei Teilen besteht und flexibel und bauraumoptimal im Magnetventil integriert werden kann. Das bedeutet, dass das Rückschlagventil unabhängig von der Magnetventilmontage gefertigt, montiert und dann zu beliebigen Zeitpunkten als Unterbaugruppe in das Magnetventil einfach integriert werden kann. Dadurch lässt sich in vorteilhafter Weise die Fertigung der Magnetventile vereinfachen bzw. flexibler gestalten.

## Patentansprüche

1. Rückschlagventil mit einem Ventilträger (31), der einen Fluidkanal (39) und einen zugehörigen ersten Dichtbereich (32) aufweist, wobei der Fluidkanal (39) über ein bewegliches erstes Schließelement (33) schließbar ist, das einen zweiten Dichtbereich (33.1) aufweist, wobei der erste Dichtbereich (32) und der zweite Dichtbereich (33.1) im geöffneten Zustand des Fluidkanals (39) einander gegenüberliegen und im geschlossenen Zustand des Fluidkanals (39) dichtend zusammenwirken, wobei das erste Schließelement (33) mindestens ein Führungselement (34) umfasst, an dessen Ende ein Halteelement (35) angeordnet ist, wobei das mindestens eine Führungselement (34) mit dem Halteelement (35) derart durch den Fluidkanal (39) geführt ist, dass das zugehörige Halteelement (35) am anderen Ende des Fluidkanals (39) verhakt ist, wobei der erste Dichtbereich (32) und der zweite Dichtbereich (33.1) im geöffneten Zustand des Fluidkanals (39) einander mit einem vorgegebenen Abstand gegenüberliegen und das zugehörige Halteelement (35) mindestens teilweise auf einem Rand des Fluidkanals (39) aufliegt, **dadurch gekennzeichnet, dass** das erste Schließelement (33) als ein mit dem Fluidkanal (39) leitend verbundener Hohlkörper ausgeführt ist, in dessen Innenraum ein dritter Dichtbereich (36) ausgebildet ist und in dem ein zweites bewegliches Schließelement (37) mit einem vorgebbaren Hub (h2) geführt ist, das einen vierten Dichtbereich (37.1) aufweist, wobei der dritte Dichtbereich (36) und der vierte Dichtbereich (37.1) im geöffneten Zustand des Fluidkanals (39) einander mit einem Abstand gegenüberliegen, der vom vorgegebenen Hub (h2) des zweiten Schließelements (37) bestimmt ist, und im geschlossenen Zustand des Fluidkanals (39) dichtend zusammenwirken und die leitende Verbindung zum Fluidkanal (39) schließen.

2. Rückschlagventil nach Anspruch 1, **dadurch gekennzeichnet, dass** der vorgegebene Abstand, mit dem der erste Dichtbereich (32) und der zweite Dichtbereich (33.1) im geöffneten Zustand des Fluidkanals (39) einander gegenüberliegen, durch den Hub (h1) des ersten Schließelements (33) vorgegeben ist.

3. Rückschlagventil nach Anspruch 2, **dadurch gekennzeichnet, dass** der Hub (h1) des ersten Schließelements (33) über die Länge des mindestens einen Führungselements (34) vorgebbar ist.

4. Rückschlagventil nach einem der Ansprüche 1 bis 3, **dadurch gekennzeichnet, dass** der Hub (h2) des zweiten beweglichen Schließelements (37) durch mindestens eine Begrenzungsnase (38) vorgebbar ist, die in den Innenraum des ersten Schließelements (33) ragt.

5. Rückschlagventil nach Anspruch 4, **dadurch gekennzeichnet, dass** das zweite Schließelement (37) im geöffneten Zustand des Rückschlagventils (30) an der mindestens einen Begrenzungsnase (38) anliegt und die leitende Verbindung zum Fluidkanal (39) freigibt.

6. Rückschlagventil nach einem der Ansprüche 1 bis 5, **dadurch gekennzeichnet, dass** das erste Schließelement (33) und das zweite Schließelement (37) den Fluidkanal (39) zweistufig öffnen und schließen.

7. Rückschlagventil nach einem der Ansprüche 1 bis 6, **dadurch gekennzeichnet, dass** das erste Schließelement (33) als Kunststoffformteil ausgeführt ist, wobei der zweite Dichtbereich (33.1) als abgerundete Dichtfläche ausgeführt ist und der dritte Dichtbereich (36) als Dichtsitz ausgeführt ist.

8. Rückschlagventil nach Anspruch 7, **dadurch gekennzeichnet, dass** das zweite Schließelement (37) als Kugel ausgeführt ist.

9. Magnetventil mit einer Magnetbaugruppe (2), einer Ventilpatrone (10) und einem Hauptventilsitz (17), **gekennzeichnet durch** ein Rückschlagventil (30) nach einem der Ansprüche 1 bis 8.

## Claims

1. Non-return valve with a valve carrier (31) which has a fluid duct (39) and an associated first sealing region (32), the fluid duct (39) being closable via a movable first closing element (33) which has a second sealing region (33.1), the first sealing region (32) and the second sealing region (33.1) lying opposite one another in the open state of the fluid duct (39) and cooperating sealingly in the closed state of the fluid duct (39), the first closing element (33) comprising at least one guide element (34), at the end of which a holding element (35) is arranged, the at least one guide element (34) being guided through the fluid duct (39) by means of the holding element (35) in such a way that the associated holding element (35) is hooked at the other end of the fluid duct (39), the first sealing region (32) and the second sealing region (33.1) lying opposite one another with a predetermined clearance in the open state of the fluid duct (39), and the associated holding element (35) lying at least partially on a margin of the fluid duct (39), **characterized in that** the first closing element (33) is designed as a hollow body which is connected conductively to the fluid duct (39) and in the inner space of which a third sealing region (36) is formed and in which is guided with a predeterminable stroke (h2) a second movable closing element (37) which has a fourth sealing region (37.1), the third sealing region (36) and the fourth sealing region (37.1) lying opposite one another in the open state of the fluid duct (39) with a clearance which is determined by the predetermined stroke (h2) of the second closing element (37), and, in the closed state of the fluid duct (39), cooperating sealingly and closing the conductive connection to the fluid duct (39).

2. Non-return valve according to Claim 1, **characterized in that** the predetermined clearance with which the first sealing region (32) and the second sealing region (33.1) lie opposite one another in the open state of the fluid duct (39) is predetermined by the stroke (h1) of the first closing element (33).

3. Non-return valve according to Claim 2, **characterized in that** the stroke (h1) of the first closing element (33) can be predetermined via the length of the at least one guide element (34).

4. Non-return valve according to one of Claims 1 to 3, **characterized in that** the stroke (h1) of the second movable closing element (37) can be predetermined by at least one limiting nose (38) which projects into the inner space of the first closing element (33).

5. Non-return valve according to Claim 4, **characterized in that** the second closing element (37) bears in the open state of the non-return valve (30) against the at least one limiting nose (38) and releases the conductive connection to the fluid duct (39).

6. Non-return valve according to one of Claims 1 to 5, **characterized in that** the first closing element (33) and the second closing element (37) open and close the fluid duct (39) in two stages.

7. Non-return valve according to one of Claims 1 to 6, **characterized in that** the first closing element (33) is designed as a plastic moulding, the second sealing region (33.1) being designed as a rounded sealing surface and the third sealing region (36) being designed as a sealing seat.

8. Non-return valve according to Claim 7, **characterized in that** the second closing element (37) is designed as a ball.

9. Magnetic valve with a magnet subassembly (2), with a valve cartridge (10) and with a main valve seat (17), **characterized by** a non-return valve (30) according to one of claims 1 to 8.

## Revendications

1. Clapet anti-retour comprenant un support de clapet (31) qui présente un canal de fluide (39) et une première région d'étanchéité associée (32), le canal de fluide (39) pouvant être fermé par le biais d'un premier élément de fermeture mobile (33) qui présente une deuxième région d'étanchéité (33.1), la première région d'étanchéité (32) et la deuxième région d'étanchéité (33.1) étant opposées l'une à l'autre dans l'état ouvert du canal de fluide (39) et coopérant hermétiquement dans l'état fermé du canal de fluide (39), le premier élément de fermeture (33) comprenant au moins un élément de guidage (34) à l'extrémité duquel est disposé un élément de retenue (35), l'au moins un élément de guidage (34) étant guidé avec l'élément de retenue (35) à travers le canal de fluide (39) de telle sorte que l'élément de retenue associé (35) soit accroché à l'autre extrémité du canal de fluide (39), la première région d'étanchéité (32) et la deuxième région d'étanchéité (33.1), dans l'état ouvert du canal de fluide (39), étant opposées l'une à l'autre avec un espacement prédéfini, et l'élément de retenue associé (35) reposant au moins en partie sur un bord du canal de fluide (39), **caractérisé en ce que** le premier élément de fermeture (33) est réalisé sous la forme d'un corps creux connecté de manière conductrice au canal de fluide (39), dans l'espace intérieur duquel est réalisée une troisième région d'étanchéité (36), et dans lequel un deuxième élément de fermeture mobile (37) est guidé avec une course prédéfinissable (h2), lequel deuxième élément de fermeture mobile présente une quatrième région d'étanchéité (37.1), la troisième région d'étanchéité (36) et la quatrième région d'étanchéité (37.1), dans l'état ouvert du canal de fluide (39), étant opposées l'une à l'autre avec un certain espacement, qui est déterminé par la course prédéfinie (h2) du deuxième élément de fermeture (37), et coopérant de manière hermétique dans l'état fermé du canal de fluide (39) et fermant la connexion conductrice au canal de fluide (39).

2. Clapet anti-retour selon la revendication 1, **caractérisé en ce que** l'espacement prédéfini avec lequel la première région d'étanchéité (32) et la deuxième région d'étanchéité (33.1) sont opposées l'une à l'autre dans l'état ouvert du canal de fluide (39), est prédéfinie par la course (h1) du premier élément de fermeture (33).

3. Clapet anti-retour selon la revendication 2, **caractérisé en ce que** la course (h1) du premier élément de fermeture (33) peut être prédéfinie sur la longueur de l'au moins un élément de guidage (34).

4. Clapet anti-retour selon l'une quelconque des revendications 1 à 3, **caractérisé en ce que** la course (h2) du deuxième élément de fermeture mobile (37) peut être prédéfinie par au moins un nez de limitation (38) qui pénètre dans l'espace interne du premier élément de fermeture (33).

5. Clapet anti-retour selon la revendication 4, **caractérisé en ce que** le deuxième élément de fermeture (37), dans l'état ouvert du clapet anti-retour (30), s'applique contre l'au moins un nez de limitation (38) et libère la connexion conductrice au canal de fluide (39).

6. Clapet anti-retour selon l'une quelconque des revendications 1 à 5, **caractérisé en ce que** le premier élément de fermeture (33) et le deuxième élément de fermeture (37) ouvrent et ferment le canal de fluide (39) en deux étapes.

7. Clapet anti-retour selon l'une quelconque des revendications 1 à 6, **caractérisé en ce que** le premier élément de fermeture (33) est réalisé sous forme de pièce moulée en plastique, la deuxième région d'étanchéité (33.1) étant réalisée sous forme de surface d'étanchéité arrondie et la troisième région d'étanchéité (36) étant réalisée sous forme de siège d'étanchéité.

8. Clapet anti-retour selon la revendication 7, **caractérisé en ce que** le deuxième élément de fermeture (37) est réalisé sous forme de bille.

9. Electrovanne comprenant un module magnétique (2), une cartouche de clapet (10) et un siège de clapet principal (17), **caractérisé par** un clapet anti-retour (30) selon l'une quelconque des revendications 1 à 8.
